# EUROPÄISCHE PATENTSCHRIFT

(11) **EP 1 064 466 B1**
(45) Veröffentlichungstag und Bekanntmachung des Hinweises auf die Patenterteilung: **20.03.2002**
(21) Anmeldenummer: 00903607.0
(22) Anmeldetag: 22.01.2000
(51) Int. Cl.: F16B 19/08

(54) **STANZNIET**
PUNCHING RIVET
RIVET A ESTAMPER

(30) Priorität: 26.01.1999 DE 19903059
(43) Veröffentlichungstag der Anmeldung: 03.01.2001
(73) Patentinhaber: Richard Bergner Verbindungstechnik GmbH & Co KG, 91126 Schwabach (DE)
(72) Erfinder: DEHLKE, Klaus, D-91575 Windsbach (DE)
(74) Vertreter: Tergau & Pohl Patentanwälte
(86) Internationale Anmeldenummer: EP0000465
(87) Internationale Veröffentlichungsnummer: WO0045056

(56) Entgegenhaltungen:
- WO-A-85/05414
- WO-A-95/35174
- DE-A- 4 333 052
- US-A- 2 096 598

## Beschreibung

Die Erfindung betrifft ein Stanzniet, insbesondere in Form eines Halbhohlniets, mit einem Nietkopf und mit einem sich an diesen anschließenden Nietschaft.

Ein solches Stanzniet wird in der Verbindungstechnik zum Verbinden mehrerer Fügeteile verwendet. Beim Stanzniet- oder Fügevorgang durchstößt das Stanzniet mit seinem am Ende des Nietschafts angeordneten Nietfuß das erste, obenliegende Fügeteil. Beim Eindringen des Niets in das zweite, untenliegende Fügeteil weitet und spreizt sich der hohl ausgeführte Nietschaft auf. Durch die Weitung und Spreizung wird in der Regel ein Hinterschnitt des von dem Stanzniet bereits durchdrungenen Fügeteil-Materials bewirkt und es entsteht eine formschlüssige Verbindung. Beim Stanznieten entfällt also die Notwendigkeit des Vorlochens. Der Fügeprozess ist daher sehr flexibel und vor allen Dingen schnell. Stanznieten werden nicht zuletzt deshalb vermehrt im Automobilsektor eingesetzt, um Karosseriebleche miteinander zu verbinden.

Die Qualität der Nietverbindung wird entscheidend von der Geometrie des Niets im Ausgangszustand beeinflußt. Bereits geringfügige Geometrieänderungen, beispielsweise im Bereich von 1/10mm im Nietfußbereich, führen zu deutlich meßbaren Eigenschaftsänderungen der fertigen Nietverbindung.

In der WO85/0541 ist ein herkömmliches Stanzniet beschrieben, bei dem in einer der dargestellten Ausführungsbeispiele der Nietschaft unter Bildung eines rechten Winkels in die Unterseite des Nietkopfs übergeht. In einer weiteren dargestellten Ausführungsform ist der Übergang zwischen dem Außendurchmesser des Nietschafts und dem des Nietkopfs schräg ausgebildet. Im Schnitt gesehen ist der Übergang also trapezförmig. Gemeinsam ist beiden Ausführungsformen, dass zwischen dem Nietschaft und dem Nietkopf ein starker Knick gebildet ist. An dieser Knickstelle treten beim Fügevorgang mitunter hohe Spannungsspitzen auf, die die Qualität der fertigen Nietverbindung nachteilig beeinflussen. Zudem besteht die Gefahr, dass im Bereich des Knicks zwischen dem Nietkopf und den Fügeteilen ein Hohlraum eingeschlossen wird, so dass die Verbindung anfällig für Korrosion ist.

In der DE43 33 052 A1 ist ein Stanzniet beschrieben, bei dem der Nietschaft gerundet in den Nietkopf übergeht, wobei die Rundung einen Unterkopfradius bildet. Durch diese Ausgestaltung sollen Spannungsspitzen beim Fügevorgang vermieden werden.

Im Automobilbau geht nicht zuletzt aus Gründen der Kraftstoffersparnis der Trend vermehrt zur Leichtbauweise. In jüngster Zeit wurden zu diesem Zweck sogenannte höherfeste Stahlbleche entwickelt, die verbesserte mechanische Eigenschaften aufweisen. Dadurch ist die Verwendung von dünneren Blechen möglich, so dass das eingesetzte Material und damit das Gewicht reduziert werden. Typischerweise liegen die Blechstärken solcher höherfesten Stahlbleche bei etwa 1 mm. Diese extrem dünnen Bleche werfen das Problem auf, dass der Nietschaft nur sehr kurz ausgeführt werden kann, und dass das Auseinanderspreizen des Nietschafts innerhalb einer relativ kurzen Wegstrecke erfolgen muss. Da die Hebelwirkung für das Aufspreizen des Schafts aufgrund der geringen Schaftlänge klein ist, sollte der Schaft leicht aufspreizbar sein, um einen ausreichenden Hinterschnitt zu erhalten. Das aus der DE 43 33 052 A1 bekannte Niet ist zur Verbindung solcher dünnen Bleche nur bedingt geeignet, da wegen des Unterkopfradius im Übergangsbereich zwischen Nietschaft und Nietkopf eine vergleichsweise große Materialanhäufung vorliegt. Diese Materialanhäufung erschwert die Aufspreizung des Nietschafts, insbesondere bei kurzen Schaftlängen.

Der Erfindung liegt die Aufgabe zugrunde, ein Stanzniet anzugeben, das insbesondere auch zum Verbinden von dünnen Fügeteilen geeignet ist.

Die Aufgabe wird gemäß der Erfindung gelöst durch ein Stanzniet mit einem Nietkopf und einem sich an diesen anschließenden Nietschaft, wobei der Übergang vom Außendurchmesser des Nietschafts in den Außendurchmesser des Nietkopfs in einer Anzahl von diskreten Abschnitten erfolgt.

Im Übergangsbereich sind also mehrere Abschnitte mit unterschiedlichen Außenabmessungen vorgesehen. Diese Ausbildung hat einerseits den Vorteil, dass durch die Anordnung von mehreren Abschnitten die zwischen den Abschnitten auftretenden Knickstellen relativ klein sind, so dass beim Fügevorgang keine oder nur geringe Spannungsspitzen auftreten, und dass das Ausbilden von Hohlräumen zwischen dem Nietkopf und den zu fügenden Fügeteilen vermieden ist. Gleichzeitig besteht durch die Anordnung mehrerer diskreter Abschnitte die Möglichkeit, die Materialanhäufung an der Unterseite des Nietkopfs, also im Bereich des Übergangs vom Nietschaft zum Nietkopf, gering zu halten. Dies hat zur Folge, dass der Nietschaft einen möglichst langen parallel verlaufende Nietschaft ohne wulstartige Verdickung aufweist. Damit ist ein leichtes Aufspreizen des Nietschafts gewährleistet. Die vorgeschlagene Nietgeometrie verbindet also den Vorteil der Vermeidung von Spannungsspitzen mit dem Vorteil der Eignung für dünne Bleche.

Die Ausbildung des Übergangs mit mehreren diskreten Abschnitten hat im Vergleich zu der bekannten Ausführung mit dem Unterkopfradius den wesentlichen Vorteil, dass das Verhältnis zwischen Kopfdurchmesser und Schaftdurchmesser nahezu problemlos variiert, insbesondere erhöht, werden kann, ohne dass eine zu große Materialanhäufung an der Unterseite des Nietkopfs auftritt. Durch die neue Unterkopfgeometrie lässt sich also ein längerer paralleler Nietschaft erzielen. Die neue Unterkopfgeometrie mit diskreten Abschnitten gewährleistet zudem einen ausreichend großen Hinterschnitt und damit eine hohe Festigkeit der Stanznietverbindung. Diese hohe Festigkeit wird bereits bei relativ geringen Einpresskräften erreicht.

In einer bevorzugten Ausführung geht der Nietschaft - im Schnitt gesehen - polygonal in den Nietkopf über. Die einzelnen diskreten Abschnitte sind also durch aufeinanderfolgende schräge Abschnitte gebildet. Die einzelnen Abschnitte sind trapezförmig ausgebildet, wobei die Trapezseiten zweier aufeinanderfolgender Abschnitte unterschiedliche Steigungen aufweisen. Durch die Aneinanderreihung von schrägen Abschnitten wird die Ausbildung von Spannungsspitzen beim Fügevorgang weitgehend vermieden.

Zur Vermeidung der Spannungsspitzen ist weiterhin vorzugsweise vorgesehen, dass der Außendurchmesser der einzelnen Abschnitte zum Nietkopf hin stetig zunimmt.

Vorteilhafterweise bilden die einzelnen Abschnitte einen konvexen, und zwar insbesondere einen durchgängig konvexen Übergang in den Nietkopf, um Stufen zu vermeiden.

Für einen möglichst langen parallelen Bereich des hohlzylindrisch ausgebildeten Nietschafts ist in einer bevorzugten Ausbildung vorgesehen, dass der Übergang vom Nietschaft zum Nietkopf im Bereich des dem Nietkopf zugewandten Endes des Hohlzylinders beginnt. Der Übergang vom Nietschaft in den Nietkopf ist daher im Wesentlichen komplett in den Nietkopf integriert.

Ein Ausführungsbeispiel wird im Folgenden anhand der Zeichnung näher erläutert. Es zeigen jeweils in schematischen Schnitt-Darstellungen:
- Fig. 1: ein herkömmliches Niet, bei dem der Nietschaft schräg in den Nietkopf übergeht,
- Fig. 2: ein herkömmliches Niet, bei dem der Nietschaft gerundet unter Ausbildung eines Unterkopfradius in den Nietkopf übergeht,
- Fig. 3: eine fertige Nietverbindung und
- Fig. 4: ein Stanzniet, bei dem der Übergang zwischen Nietschaft und Nietkopf in mehreren diskreten Abschnitten erfolgt.

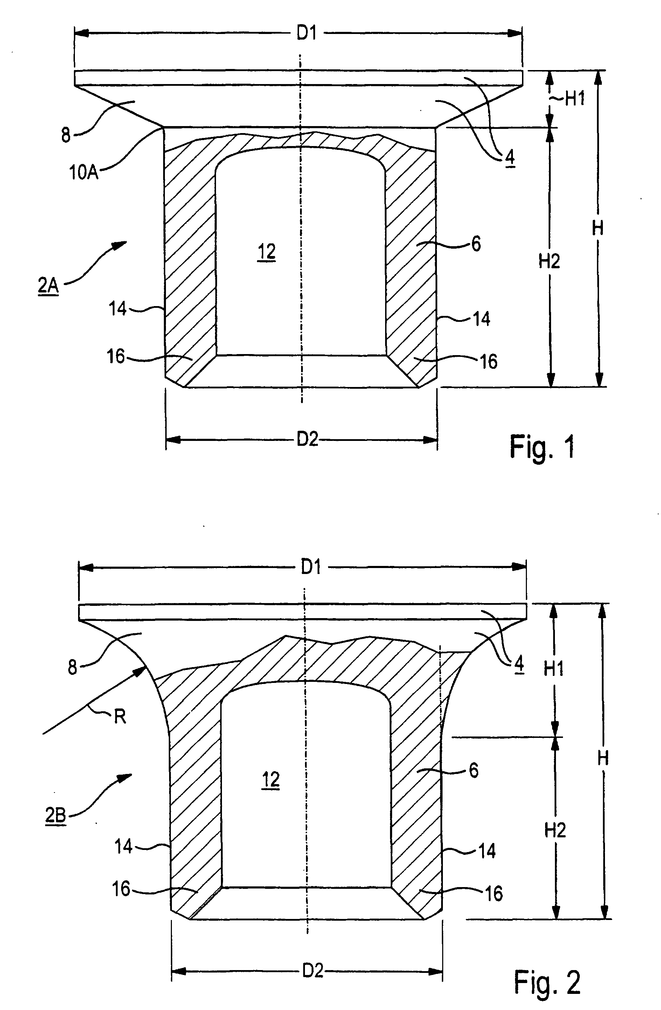

Gemäß Fig. 1 weist ein als Halbhohlniet ausgeführte Stanzniet 2A einen Nietkopf 4 mit einem Außendurchmesser D1 sowie einen sich an den Nietkopf 4 anschließenden Nietschaft 6 mit einem Außendurchmesser D2 auf. Der Nietkopf 4 ist an seiner Unterseite zum Nietschaft 6 hin schräg ausgebildet. Diese Schräge bildet den Übergang 8 zwischen dem Außendurchmesser D2 des Nietschafts 6 und dem Außendurchmesser D1 des Nietkopfs 4. Zwischen dem Nietschaft 6 und dem Übergang 8 befindet sich eine Knickstelle 10A, die beim Fügevorgang zu Spannungsspitzen führt.

Der Nietschaft 6 ist hohlzylindrisch mit einem innenliegenden Hohlraum 12 und parallel verlaufenden Seitenwänden 14 ausgebildet. Am dem Nietkopf 4 abgewandten Ende des Nietschafts 6 befindet sich der Nietfuß 16, der als Schneidteil mit Anspitzung ausgebildet ist. Das Stanzniet 2A gemäß Fig. 1 weist eine Gesamthöhe H auf, die sich zusammensetzt aus der kombinierten Höhe H1 des Nietkopfs 4 und des Übergangs 8 sowie der Höhe H2 der parallel verlaufenden Seitenwände 14.

Im Unterschied zum Stanzniet 2A gemäß Fig. 1 weist ein Stanzniet 2B nach Fig. 2 einen den Übergang 8 bildenden Unterkopfradius R auf. Die Außenabmessungen, nämlich die Außendurchmesser D1 und D2 sowie die Gesamthöhe H sind identisch zum Stanzniet 2A gemäß Fig. 1. Aus Fig. 2 ist zu entnehmen, dass sich der Übergang 8 aufgrund des Unterkopfradius R bis in den Bereich des Nietschafts 6 erstreckt. Die kombinierte Höhe H1 aus Nietkopf 4 und Übergang 8 hat im Vergleich zum Stanzniet 2A gemäß Fig. 1 deutlich zugenommen. Da die Gesamthöhe H gleich ist, erfolgt die Zunahme auf Kosten der Höhe H2. Der parallele Bereich der Seitenwände 14 ist daher gering. Infolge der Ausbildung mit Unterkopfradius R ist das Stanzniet 2B im Unterkopfbereich daher massiv mit einer Materialanhäufung ausgebildet. Dies erschwert ein Auseinanderbiegen des Nietschafts 6 beim Fügevorgang und unter Umständen das Positionieren und Fixieren des Stanzniets 28 beim Verarbeiten.

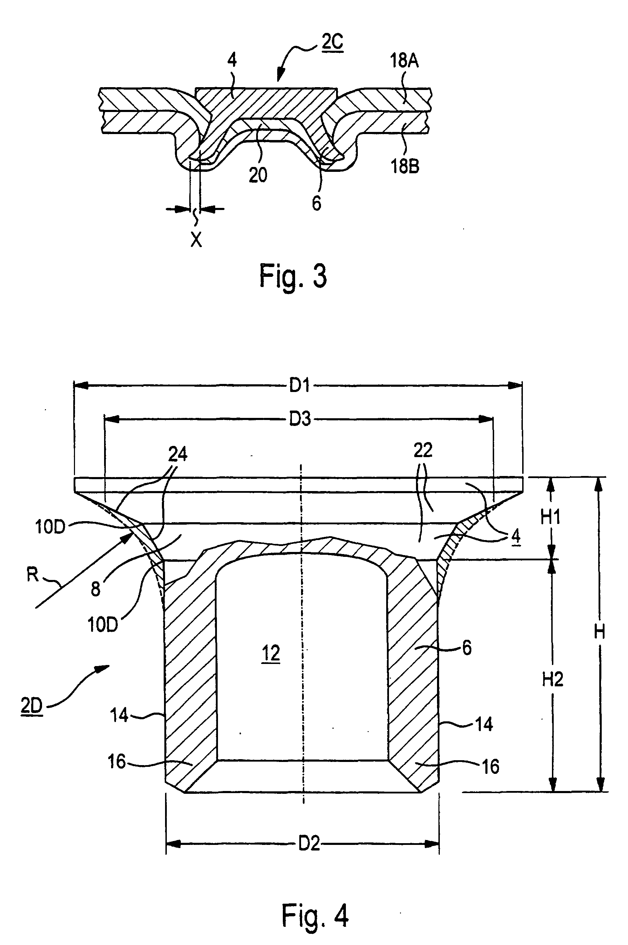

Das Aufweiten des Nietschafts 6 ist jedoch eine wesentliche Voraussetzung, damit ein Stanzniet 2C mit zwei zu verbindenden Fügeteilen 18A, 18B eine kraftschlüssige Verbindung in Form eines Formschlusses ausbildet, wie dies aus der Fig. 3 zu entnehmen ist. Beim Fügevorgang der beiden Fügeteile 18A,18B durchstößt das Stanzniet 2C zunächst das obere Fügeteil 18A und schneidet anschließend in das unter Fügeteil 18B ein, ohne dieses zu durchstoßen. Dabei wird der Nietschaft 6 aufgeweitet und bildet einen Hinterschnitt mit einer Hinterschnittweite X. Beim Fügevorgang werden die Fügeteile 18A und 18B jeweils plastisch verformt, wobei das untere Fügeteil 18B plastisch ausgeformt ist. Das aus dem oberen Fügeteil 18A ausgestanzte Material, der sogenannte Stanzbutzen 20, ist im Inneren des Nietschafts 6 unverlierbar eingeschlossen. Der Hohlraum 12 ist mit dem Fügematerial angefüllt. Das Stanzniet 2C bildet mit der Oberfläche des oberen Fügeteils 18A vorzugsweise eine plane Oberfläche. Der Füge- oder Nietvorgang erfolgt mit Hilfe eines Nietwerkzeugs, welches eine Matrize und einen Stempel umfasst. Die Matrize ist in der Regel als ein dem Hohlraum 12 angepasster Dom ausgebildet und wird am unteren Fügeteil 18B gegengehalten, während das Stanzniet 2C mit Hilfe des Stempels in die Fügeteile 18A,18B getrieben wird.

Im Zuge des Trends zum Leichtbau im Automobilsektor werden zunehmend sogenannte höherfeste Stähle für die Karosseriebleche verwendet, wodurch diese im Vergleich zu herkömmlichen Blechen dünner ausgeführt werden können. Dies erfordert, dass die Nieten ebenfalls entsprechend kürzer ausgeführt werden.

Ein insbesondere für das Fügen von sehr dünnwandigen Blechen geeignetes Stanzniet 2D ist in Fig. 4 dargestellt. Dieses Stanzniet 2D weist mehrere - im Ausführungsbeispiel zwei - diskrete Abschnitte 22 auf, die den Übergang 8 zwischen Nietschaft 6 und Nietkopf 4 bilden. Im dargestellten Schnitt geht der Außendurchmesser D2 des Nietschafts 6 polygonal in den Außendurchmesser D1 des Nietkopfs 4 über. Die einzelnen Polygonabschnitte 24 bilden Schrägen, die sich aneinander reihen. Zwischen den einzelnen Polygonabschnitten 24 und zwischen dem zum Nietschaft 6 nächsten Polygonabschnitt 24 und dem Nietschaft 6 sind jeweils Knickstellen 10D vorhanden. Diese sind jedoch deutlich weniger ausgeprägt als die Knickstelle 10A gemäß Fig. 1, so dass Spannungsspitzen im Unterkopfbereich beim Fügevorgang vermieden sind.

Bei der dargestellten polygonartigen Ausbildung nimmt der Außendurchmesser D3 des Übergangs 8 kontinuierlich und stetig zum Außendurchmesser D1 des Nietkopfes 4 zu. Durch die schräge Ausbildung der einzelnen Polygonabschnitte 24 gilt dies gleichermaßen für jeden der einzelnen diskreten Abschnitte 22. Der von den diskreten Abschnitten 22 gebildete Übergang 8 ist dadurch im Wesentlichen durchgängig konvex gekrümmt.

Die Unterkopfgeometrie gemäß Fig. 2 mit dem Unterkopfradius R ist gestrichelt dargestellt, wobei der Überschneidungsbereich der beiden Ausführungsformen schraffiert dargestellt ist. Es ist zu erkennen, dass das Stanzniet 2D gemäß der Fig. 4 im Unterkopfbereich eine deutlich geringere Materialanhäufung aufweist. Zudem ist der Übergang 8 nahezu vollständig im Nietkopf 4 integriert, wobei der Nietkopf 4 hier derart definiert ist, dass er sich an den Hohlraum 12 anschließt. Dadurch ist erreicht, dass die Höhe H2, innerhalb der die Seitenwände 14 parallel verlaufen, vergleichsweise groß ist. Aufgrund der geringeren Materialanhäufung im Unterkopfbereich sind beim Stanzniet 2D gemäß Fig. 4 deutlich geringere Einpresskräfte notwendig als beim herkömmlichen Stanzniet 2B gemäß Fig. 2. Weiterhin ist ein größeres Aufspreizen ermöglicht, so dass sich größere Hinterschnitte erzielen lassen, was sich günstig auf die Festigkeit der zusammengefügten Fügeteile 18A,18B auswirkt. Aufgrund der polygonalen Unterkopfgeometrie ist das vom Stanzniet 2D verdrängte Volumen vergleichsweise gering, so dass das sogenannte Matrizenvolumen, also vergleichsweise klein ausgeführt sein kann. Dadurch ist die Beanspruchung beim Umformen des unteren Fügeteils 18B geringer und die Gefahr eines Reißen des unteren Fügeteils 18B ist reduziert.

Die polygonale Unterkopfgeometrie erlaubt eine sehr hohe Flexibilität bei der Wahl des Verhältnisses zwischen den Außendurchmessern D1 und D2. Während bei der Ausgestaltung mit dem Unterkopfradius R eine Zunahme des Verhältnisses D1/D2 eine Zunahme des Radius R und damit eine Zunahme der Materialanhäufung im Unterkopfbereich zur Folge hat, ist diese zusätzliche Materialanhäufung bei der polygonalen Unterkopfgeometrie insbesondere im kritischen Bereich des Schaftendes deutlich geringer. Bei einer polygonalen Ausführung sind die Gestaltungsmöglichkeiten deutlich größer als bei einer mit Unterkopfradius R. Gleichzeitig ist mit der neuartigen Ausgestaltung der Unterkopfgeometrie gewährleistet, dass beim Fügen keine unzulässig hohen Spannungsspitzen auftreten. Auch lässt sich die polygonale Unterkopfgeometrie herstellungstechnisch einfach verwirklichen.

### Bezugszeichenliste

- 2: Stanzniet
- 4: Nietkopf
- 6: Nietschaft
- 8: Übergang
- 10: Knickstelle
- 12: Hohlraum
- 14: Seitenwand
- 16: Nietfuß
- 18A: oberes Fügeteil
- 18B: unteres Fügeteil
- 20: Stanzbutzen
- 22: diskrete Abschnitte
- 24: Polygonabschnitt

- D1: Außendurchmesser des Nietkopfs
- D2: Außendurchmesser des Nietschafts
- D3: Außendurchmesser des Übergangs
- H: Gesamthöhe
- H1: kombinierte Höhe von Nietkopf und Übergang
- H2: Höhe des parallelen Bereichs der Seitenwände
- X: Hinterschnittweite

## Patentansprüche

1. Stanzniet (2) mit einem Nietkopf (4) und einem sich an diesen anschließenden Nietschaft (6),
**dadurch gekennzeichnet.**
**dass** der Übergang (8) vom Außendurchmesser (D2) des Nietschafts (6) in den Außendurchmesser (D1 ) des Nietkopfs (4) in einer Anzahl von nicht gerundeten diskreten Abschnitten (22) erfolgt.

2. Stanzniet (2) nach Anspruch 1,
**dadurch gekennzeichnet,**
**dass** der Nietschaft (6) polygonal in den Nietkopf (4) übergeht.

3. Stanzniet (2) nach Anspruch 1 oder 2,
**dadurch gekennzeichnet,**
**dass** der Außendurchmesser (D3) der einzelnen Abschnitte (22) zum Nietkopf (4) hin stetig zunimmt.

4. Stanzniet (2) nach einem der vorhergehenden Ansprüche,
**dadurch gekennzeichnet,**
**dass** der Übergang (8) im wesentlichen durchgängig konvex verläuft.

5. Stanzniet (2) nach einem der vorhergehenden Ansprüche,
**dadurch gekennzeichnet,**
**dass** der Nietschaft (6) als Hohlzylinder mit einem Hohlraum (12) ausgebildet ist, und dass der Übergang (8) vom Nietschaft (6) zum Nietkopf (4) im Bereich des dem Nietkopf (4) zugewandten Endes des Hohlraums (12) beginnt.

## Claims

1. Punch rivet (2) with a rivet head (4) and a rivet shank (6) adjoining the latter, **characterized in that** the transition (8) from the external diameter (D2) of the rivet shank (6) to the external diameter (D1) of the rivet head (4) takes place in a number of non-rounded separate sections (22).

2. Punch rivet (2) according to Claim 1, **characterized in that** the rivet shank (6) merges polygonally with the rivet head (4).

3. Punch rivet (2) according to Claim 1 or 2, **characterized in that** the external diameter (D3) of the individual sections (22) increases constantly towards the rivet head (4).

4. Punch rivet (2) according to one of the preceding claims, **characterized in that** the transition (8) essentially runs convexly throughout.

5. Punch rivet (2) according to one of the preceding claims, **characterized in that** the rivet shank (6) is designed as a hollow cylinder with a hollow space (12), and **in that** the transition (8) from the rivet shank (6) to the rivet head (4) starts in the region of that end of the hollow space (12) facing the rivet head (4).

## Revendications

1. Rivet à estamper (2), comprenant une tête de rivet (4) et un fût de rivet (6) qui se raccorde à celle-ci,
**caractérisé en ce que**
la transition (8) depuis le diamètre extérieur (D2) du fût de rivet (6) jusque dans le diamètre extérieur (D1) de la tête de rivet (4) a lieu par un certain nombre de tronçons (22) discrets non arrondis.

2. Rivet à estamper (2) selon la revendication 1,
**caractérisé en ce que**
le fût de rivet (6) se transforme de manière polygonale dans la tête de rivet (4).

3. Rivet à estamper (2) selon l'une ou l'autre des revendications 1 et 2,
**caractérisé en ce que**
le diamètre extérieur (D3) des tronçons individuels (22) augmente constamment jusqu'à la tête de rivet (4).

4. Rivet à estamper (2) selon l'une des revendications précédentes,
**caractérisé en ce que**
la transition (8) se déroule sensiblement entièrement de façon convexe.

5. Rivet à estamper (2) selon l'une des revendications précédentes,
**caractérisé en ce que**
le füt de rivet (6) est réalisé sous forme d'un cylindre creux avec une cavité (12), et **en ce que** la transition (8) du fût de rivet (6) à la tête de rivet (4) commence dans la zone de l'extrémité de la cavité (12) tournée vers la tête de rivet (4).
